# EUROPEAN PATENT SPECIFICATION

(11) **EP 1 731 332 B1**
(45) Date of publication and mention of the grant of the patent: **15.07.2009**
(21) Application number: 06011069.9
(22) Date of filing: 30.05.2006
(51) Int. Cl.: B60C 1/00

(54) **Pneumatic tire having a base tread rubber composition containing a thermosetting resin**
Pneumatischer Reifen mit einer Kautschukmischung für die Basisschicht, die ein wärmehärtendes Harzmaterial enthält.
Pneumatique dont la bande de roulement a une composition de caoutchouc contenant une résine thermodurcissable

(30) Priority: 06.06.2005 JP 2005165496
(43) Date of publication of application: 13.12.2006
(73) Proprietor: SUMITOMO RUBBER INDUSTRIES, LTD., Kobe-shi, Hyogo-ken (JP)
(72) Inventor: Mizuno, Yoichi c/o Sumitomo Rubber Industries, Ltd, Kobe-shi, Hyogo-ken (JP)
(74) Representative: Manitz, Finsterwald & Partner GbR

(56) References cited:
- WO-A-02/10269
- WO-A-20/05042278
- US-A1- 2004 244 894

## Description

The present invention relates to a pneumatic tire.

Various means for lowering rolling resistance of a tire or improving steering stability of an automobile have been studied. As one of those means, making a tread of a tire to have a two-layer structure (an inner layer and a surface layer) is known.

In addition to remarkable enhancement in equipment and performance of an automobile, recently, expansion and development in the road network allows to increase opportunities for high-speed running. Particularly at high-speed running, a tire having a base tread, which improves always stable steering stability and ride quality, is required, and a base tread largely affecting on the tire is required to have sufficient rigidity and hardness.

In order to obtain such a base tread, rigidity is improved by compounding a large amount of carbon black with a rubber composition for a base tread, but a tire which satisfies sufficient compatibility among lowering of rolling resistance, steering stability and ride quality have not been obtained. Further, rigidity and low exothermic property are improved in excellent balance by compounding a large amount of sulfur, however, since crack resistance of the base tread is not sufficient, there are problems that cracks on the base tread and excessive abrasion are caused when the base tread is exposed after running.

Further, JP-A-2004-269684 discloses a pneumatic tire having a base tread which is compounded with collagen particles. However, the tire does not sufficiently satisfy the compatibility among steering stability, ride quality and lowering of rolling resistance.

Thus, it is required to develop a pneumatic tire which has a base tread having sufficient rigidity, hardness and crack resistance, and satisfies the compatibility among steering stability, ride quality and lowering of rolling resistance at running, particularly at high-speed running.

US 2004/0244894 A1 discloses a pneumatic tire having a tread belt comprising a tread cap and a tread base, wherein the tread base comprises a rubber composition containing per 100 parts by weight of elastomer 80 to 100 phr of NR or synthetic polyisoprene and 0 to 20 phr of polybutadiene, and wherein the rubber composition comprises 30 to 70 phr of silica and/or carbon black.

WO 2005/042278 A2 relates to a pneumatic tire containing a rubber composition including a crosslinked elastomeric material obtained by crosslinking a crosslinkable elastomeric composition containing a) 100 phr of at least one diene elastomeric polymer, b) 1 to 50 phr of at least one layered material, c) 0.1 to 15 phr of at least one methylene donor compound and d) 0.4 to 20 phr of at least one methylene acceptor compound.

WO 02/ 10269 A2 discloses a tire having a tread consisting at least partially of a rubber composition comprising a diene elastomer, an inorganic filler, a coupling agent, a methylene acceptor and a methylene donor.

An object of the present invention is to provide a pneumatic tire which has a base tread having sufficient rigidity, hardness and crack resistance, and sufficiently satisfies the compatibility among steering stability, ride quality and lowering of rolling resistance.

The present invention relates to a pneumatic tire having a base tread comprising a rubber composition containing 0.5 to 10 parts by weight of a thermosetting resin based on 100 parts by weight of a diene rubber, wherein the complex elastic modulus E* of the rubber composition measured under the conditions of a frequency of 10 Hz, an initial strain of 10 % and a dynamic strain of 1 % at 60°C using a viscoelasticity spectrometer is 8 to 15 MPa, the tan δ is at most 0.15 and the elongation at break EB of the rubber composition in a tensile test determined according to JIS K6251 is at least 300 %.

The rubber composition preferably further comprises carbon black having a nitrogen adsorbing-specific area of 74 to 115 m²/g_{.}

The thermosetting rein is preferably 0.5 to 2.5 parts by weight of a resorcin formaldehyde resin.

The pneumatic tire of the present invention has a base tread comprising a rubber composition containing a diene rubber and a thermosetting resin.

Specific example of the diene rubber in the rubber composition are a natural rubber (NR), an isoprene rubber (IR), a styrene-butadiene rubber (SBR), and a polybutadiene rubber (BR). Among these, as the diene rubber, NR and/or BR is preferable.

As the natural rubber, an example is a general natural rubber such as RSS#3, and another example is a modified natural rubber such as an epoxidized natural rubber.

An amount ratio of NR in the diene rubber is preferably at least 50 % by weight, more preferably at least 55 % by weight, and further preferably at least 60 % by weight. When the amount ratio of NR is less than 50 % by weight, it becomes difficult to suppress exothermic heat and strength at break tends to be deteriorated. Further, it is preferable that the amount ratio of NR is preferably at most 100 % by weight.

When BR is used as the diene rubber, BR may be a general BR such as BR150B available from Ube Industries, Ltd., but it is preferable to be a polybutadiene rubber (VCR) including a syndiotactic-1,2-polybutadiene since a loss tangent tan δ of the rubber composition is lowered to suppress exothermic heat of the tire, complex elastic modulus E* of the rubber composition can be further improved and the steering stability can be improved. As VCR, particularly, it is preferable to be VCR which is a complex of a high cispolybutadiene rubber and a high crystalline syndiotactic-1,2-polybutadiene such as VCR available from Ube Industries, Ltd.

The amount ratio of BR in the diene rubber is preferably at most 50 % by weight, and more preferably at most 40 % by weight. When the amount ratio of BR is more than 50 % by weight, rubber cracks are caused in the base tread and, further, low fuel costs tend to be inferior.

Specific examples of the thermosetting resin in the rubber composition are a polycondensate of a phenol compound and formaldehyde and a melamine resin.

Examples of the polycondensate of a phenol compound and formaldehyde are a polycondensate of a cashew oil, phenol and formaldehyde (for example, SP6700 available from Nippon Shokubai Co., Ltd.), and a polycondensate of resorcin and formaldehyde (for example, SUMIKANOL 620 available from Sumitomo Chemical Co., Ltd.).

As the thermosetting resin, it is preferable to be a polycondensate of a phenol compound and formaldehyde, since effects of satisfying both of the improvement in rigidity of a tire and lowering of exothermic heat can be obtained, and among them, it is particularly preferable to be a polycondensate of resorcin and formaldehyde (a resorcin formaldehyde resin) since amine is not generated at kneading the rubber composition and the adhesive property between a breaker rubber and a steel cord can be maintained in a breaker adjacent to a base tread comprising the rubber composition.

An amount of the thermosetting resin in the rubber composition is at least 0.5 part by weight based on 100 parts by weight of the diene rubber, and preferably at least 1 part by weight. When the amount is less than 0.5 part by weight, the improving effect of elastic modulus of the obtained rubber composition is insufficient, and improvement in steering stability becomes insufficient. Further, an amount of the thermosetting resin in the rubber composition is at most 10 parts by weight based on 100 parts by weight of the diene rubber, preferably at most 5 parts by weight, and more preferably at most 2.5 parts by weight. When the amount is more than 10 parts by weight, the complex elastic modulus is too high, the ride quality is deteriorated, the elongation at break is lowered, and the rolling resistance is also increased.

In the present invention, the rubber composition preferably comprises a curing accelerator together with the thermosetting resin. The curing accelerator promotes three dimensional crosslinking due to combination with the thermosetting resin, thereby, elastic modulus of the rubber composition can be improved. Further, the adhesive property of a breaker rubber which can be an adjacent part of the base tread comprising the rubber composition to steel can be surely obtained by suitably combining them.

Specific examples of the curing accelerator are hexamethylenetetramine and a methylolmelamine resin. Among these, since amine is not generated at kneading the rubber composition by using in combination with the thermosetting resin, in particular, a resorcin formaldehyde resin, thus, an effect of maintaining the adhesive property between a breaker rubber and a steel cord is obtained in the breaker adjacent to the base tread comprising the rubber composition, the curing accelerator is preferably a methylolmelamine resin.

Specific examples of the methylolmelamine resin are a partial condensate of a hexamethylolmelamine pentamethyl ether (HMMPME) and a partial condensate of hexamethoxymethylolmelamine (HMMM).

An amount of the curing accelerator in the rubber composition is preferably at least 0.5 part by weight , and more preferably at least 1 part by weight based on 100 parts by weight of the diene rubber. When the amount is less than 0.5 part by weight, a curing reaction does not tend to proceed sufficiently. Further, the amount of the curing accelerator in the rubber composition is preferably at most 3 parts by weight based on 100 parts by weight of the diene rubber, more preferably at most 2 parts by weight, and further preferably at most 1 part by weight. When the amount is more than 3 parts by weight, since a curing reaction excessively proceeds, ride quality is deteriorated and elongation at break tends to be lowered.

It is preferable that the rubber composition comprises a filler for reinforcement such as carbon black and silica other than the above-described diene rubber components and thermosetting resin, and as the filler for reinforcement, particularly, carbon black is preferable.

A nitrogen adsorbing-specific surface area (N₂SA) of carbon black is preferably 74 to 115 m²/g. When N₂SA is less than 74 m²/g, reinforcing property is low, abrasion resistance is deteriorated, and a tire tends to easily crack. Further, when the N₂SA is more than 115 m²/g, exothermic heat is easily generated and processability tends to be inferior.

To the rubber composition, additives such as an antioxidant, a wax, stearic acid, zinc oxide, sulfur and a vulcanization accelerator, which can be generally compounded into a rubber composition for a base tread, can be also suitably compounded other than the above described diene rubber, thermosetting resin, curing accelerator and filler for reinforcement.

Complex elastic modulus E* of the rubber composition measured at a measurement temperature of 60°C and dynamic strain of 1 % is at least 8 MPa, and preferably at least 10 MPa. When the complex elastic modulus E* is less than 8 MPa, it is not preferable since rigidity of the rubber composition lacks and steering stability of an automobile is insufficient. Further, the complex elastic modulus E* of the rubber composition measured at a measurement temperature of 60°C and dynamic strain of 1 % is at most 15 MPa, and preferably at most 12 MPa. When the complex elastic modulus E* is more than 15 MPa, the rubber composition is excessively hardened, the ride quality is deteriorated, and the elongation at break of the rubber is also deteriorated.

Loss tangent tan δ of the rubber composition measured at a measurement temperature of 60°C and a dynamic strain of 1 % is at most 0.15, and at most preferably 0.12. When the loss tangent tan δ is more than 0.15, it is not preferable since rolling resistance of a tire is increased and exothermic heat is also deteriorated. Further, the loss tangent tan δ of the rubber composition measured at a measurement temperature of 60°C and dynamic strain of 1 % is preferably at least 0.06, and more preferably at least 0.08. When the loss tangent tan δ is less than 0.06, steering stability tends to be inferior.

The viscoelasticity test measuring the above-mentioned complex elastic modulus and loss tangent is carried out at a measurement temperature of 60°C since 60°C is near the frequency and the temperature during actual tire running.

An elongation at break EB of the rubber composition in the tensile test is at least 300 %. When the elongation at break EB is less than 300 %, performance of the crack resistance is insufficient. Further, the tensile test is carried out according to JIS-K6251.

The above-described rubber composition is used as a base tread.

The pneumatic tire of the present invention is prepared by extrusion-processing an unvulcanized rubber composition obtained by kneading a diene rubber, a thermosetting resin, a curing accelerator, carbon black and, if necessary, various additives in matching with a shape of a base tread of the tire, forming an unvulcanized tire on a tire molding machine, and further heating and pressurizing the unvulcanized tire in a vulcanizer.

As for vulcanization conditions in the pneumatic tire of the present invention, a vulcanization temperature is 160 to 180°C under a pressure of 15 to 25 kgf and a vulcanization time is preferably 10 to 15 minutes. The complex elastic modulus, the loss tangent and the elongation at break as required in the present invention tend to be obtained by compounding a diene rubber, a thermosetting resin and a curing accelerator into a rubber composition for the base tread, and further vulcanizing the rubber composition under the above-described vulcanization conditions.

### EXAMPLES

The present invention is explained based on Examples, but is not limited thereto.

Various chemicals used in Examples are described in the following.
NR: RSS#3
BR: BR150B available from Ube Industries, Ltd.
Polybutadiene rubber (VCR) containing syndiotactic-1,2-polybutadiene: VCR412 (dispersion of a syndiotactic-1,2-polybutadiene crystal) available from Ube Industries, Ltd.
Carbon black 1: DIABLACK (N220, N₂SA: 114 m²/g) available from Mitsubishi Chemical Corporation.
Carbon black 2: SEAST N (N330, N₂SA: 74 m²/g) available from Tokai Carbon Co., Ltd.
Process oil: DIANAPROCESS AH40 available from Idemitsu Kosan Co., Ltd.
Wax: SUNNOC WAX available from OUCHI SHINKO CHEMICAL INDUSTRIAL CO., LTD.
Antioxidant: OZONONE 6C available from Seiko Chemical Co., Ltd.
Stearic acid: KIRI available from NOF Corporation.
Zinc oxide: GINREI R available from Toho Zinc Co., Ltd.
Sulfur: SULFUR available from Tsurumi Chemical Industry Co., Ltd. Vulcanization accelerator: NOCCELER NS (N-tert-butyl-2-benzothiazolylsulfenamide) available from OUCHI SHINKO CHEMICAL INDUSTRIAL CO., LTD.
Thermosetting resin 1: SP6700 (polycondensate of a cashew oil, phenol and formaldehyde) available from Nippon Shokubai Co., Ltd.
Thermosetting resin 2: SUMIKANOL 620 (resorcin formaldehyde resin) available from Sumitomo Chemical Co., Ltd.
Hexamethylenetetramine (HMT): NOCCELER H (hexamethylenetetramine) available from OUCHI SHINKO CHEMICAL INDUSTRIAL CO., LTD.
Partial condensate of a hexamethoxymethylolmelamine pentamethyl ether (HMMPME): SUMIKANOL 507 available from Sumitomo Chemical Co., Ltd.

### EXAMPLES 1 to 19 and COMPARATIVE EXAMPLES 1 to 9

### <Preparation process of a tire for a passenger vehicle>

3 parts by weight of an antioxidant, 2 parts by weight of a wax, 1 part by weight of stearic acid, 5 parts by weight of zinc oxide based on 100 parts by weight of a component of a diene rubber, and NR, BR 1 and 2, carbon black 1 and 2, a process oil, thermosetting resins 1 and 2, and sulfur were added according to the compounding amounts shown in Tables 1 and 2, and the mixture was kneaded by a Banbury mixer at about 150°C for 5 minutes. Then, 2.5 parts by weight of a vulcanization accelerator, and sulfur, and a partial condensate of HMT and HMMPME were added to the obtained kneaded article according to the compounding amounts shown in Tables 1 and 2, and the mixture was kneaded by a biaxial open roll at about 80°C for 5 minutes to obtain an unvulcanized rubber composition. The obtained unvulcanized rubber composition was molded into a shape of a base tread and laminated with other tire parts, and a tire for a passenger vehicle (tire size: 225/55 R17) was prepared by vulcanizing for 12 minutes under the conditions at 175°C and 20 kgf, and the tire for a passenger vehicle is used for the following tests.

### <Test methods>

### (Viscoelasticity test)

A test piece having a thickness of about 2 mm was cut out from a base tread of a tire for a passenger vehicle and the loss tangent tan δ and the complex elastic modulus E* at 60°C were measured by a viscoelasticity spectrometer manufactured by Iwamoto Seisakusyo K.K. under the conditions of a frequency of 10 Hz, initial strain of 10 % and dynamic strain of 1 %. It is indicated that the smaller the value of tan δ is, the lower exothermic heat of the base tread is and the smaller and the more excellent rolling resistance is. Further, it is indicated that the larger the value of E* is, the better steering stability is.

### (In-vehicle steering stability test)

Steering stability and ride quality under the condition of high-speed running at 100 km to 180 km per hour on a circuit course were evaluated by feeling, using a 3000 cc vehicle with high performance mounted with tires for a passenger vehicle. As the evaluation of the steering stability, it is indicated that 3 is good, 2 is slightly insufficient in rigidity of a tire, and 1 is insufficient in rigidity of a tire. As the evaluation result of the ride quality, 3 indicates good, 2 indicates that a tire is slightly hard, and 1 indicates a tire is too hard.

### (Tensile test)

A tensile test was carried out according to JIS K6251, using No.3 dumbbell which was cut out from a base tread of a tire for a passenger vehicle and elongation at break EB was measured. It is indicated that the larger the value of EB is, the more excellent the crack resistance performance is. A measurement temperature was set at 23°C.

### (Adhesion test of breaker rubber with steel cord)

A test piece was cut out from the edge portion of a breaker of a tire for a passenger vehicle and two kinds of test pieces were prepared; one is a test piece which was thermally aged in an oven at 80°C for one week and the other is a test piece without any treatment. The adhesion test between the first breaker and the second breaker was carried out in accordance with JIS K6256 and the appearance of the peeling surface was evaluated by points in 5 levels as follows. It is indicated that the higher the level points are, the more excellent the adhesion property between the steel cord and the rubber is.
5 points: there is no peeling on an interface at all and only rubber is aggregated and destroyed.
4 points: only a small portion of the steel cord surface is peeled to be exposed at an interface but there is no problem in durability of a tire.
3 points: a portion of the steel cord face is peeled to be exposed at an interface but the level of peeling to be exposed is acceptable unless a tire is not thermally aged.
2 points: many peelings on the steel cord surface appear at an interface and the tire has a problem in durability.
1 point: the steel cord and the rubber do not adhere at all.

Test results are shown in Tables 1 and 2.

**TABLE 1**

| | Ex. | | | | | | | | | Com. Ex. | | | | |
|---|---|---|---|---|---|---|---|---|---|---|---|---|---|---|
| | 1 | 2 | 3 | 4 | 5 | 6 | 7 | 8 | 9 | 1 | 2 | 3 | 4 | 5 |
| Amounts (parts by weight) | | | | | | | | | | | | | | |
| NR | 60 | 60 | 60 | 60 | 60 | 60 | 60 | 100 | 100 | 60 | 60 | 60 | 60 | 60 |
| BR1 | 40 | 40 | 40 | 40 | 40 | 40 | - | - | - | 40 | 40 | 40 | 40 | - |
| BR2 | - | - | - | - | - | - | 40 | - | - | - | - | - | - | 40 |
| Carbon black 1 | 60 | 60 | 60 | 60 | 60 | 60 | 60 | 60 | - | - | 60 | 60 | 60 | 60 |
| Carbon black 2 | - | - | - | - | - | - | - | - | 65 | 65 | - | - | - | - |
| Process oil | 5 | 5 | 5 | 5 | 5 | 5 | 5 | 5 | 5 | 5 | 5 | 5 | 5 | 5 |
| Thermosetting resin 1 | 1 | 3 | 4 | 5 | 6 | 10 | 3 | 3 | 3 | - | - | 0.5 | 12 | - |
| HMT | 0.1 | 0.3 | 0.4 | 0.5 | 0.6 | 1 | 0.3 | 0.3 | 0.3 | - | - | 0.05 | 1.2 | - |
| Sulfur | 2 | 2 | 2 | 2 | 2 | 2 | 2 | 2 | 2 | 2 | 2 | 2 | 2 | 2 |

| Evaluation results | | | | | | | | | | | | | | |
|---|---|---|---|---|---|---|---|---|---|---|---|---|---|---|
| tanδ | 0.127 | 0.131 | 0.13 3 | 0.135 | 0.138 | 0.15 | 0.12 | 0.115 | 0.105 | 0.11 | 0.12 | 0.125 | 0.165 | 0.118 |
| E*(MPa) | 8 | 9.4 | 11.2 | 13.8 | 14.2 | 15 | 10 | 9.3 | 9.6 | 6.4 | 6 | 6.9 | 16 | 7.8 |
| Steering stability | 2 | 3 | 3 | 3 | 3 | 3 | 3 | 3 | 3 | 1 | 1 | 2 | 3 | 2 |
| Ride quality | 3 | 3 | 3 | 3 | 2 | 2 | 3 | 3 | 2 | 2 | 3 | 3 | 1 | 3 |
| EB(%) | 355 | 353 | 345 | 342 | 321 | 305 | 335 | 347 | 325 | 315 | 360 | 360 | 285 | 340 |

**TABLE 2**

| | | Ex. | | | | | | | | | | Com. Ex. | | | |
|---|---|---|---|---|---|---|---|---|---|---|---|---|---|---|---|
| | | 10 | 11 | 12 | 13 | 14 | 15 | 16 | 17 | 18 | 19 | 6 | 7 | 8 | 9 |
| Amounts (parts by weight) | | | | | | | | | | | | | | | |
| NR | | 60 | 60 | 60 | 60 | 60 | 100 | 100 | 60 | 60 | 60 | 60 | 60 | 60 | 60 |
| BR1 | | 40 | 40 | 40 | 40 | 40 | - | - | 40 | 40 | 40 | 40 | 40 | 40 | 40 |
| Carbon black 1 | | 60 | 60 | 60 | 60 | 0 | 60 | - | 60 | 60 | 60 | 60 | 60 | 60 | 60 |
| Carbon black 2 | | - | - | - | - | - | - | 60 | - | - | - | - | - | - | - |
| Process oil | | 5 | 5 | 5 | 5 | 5 | 5 | 5 | 5 | 5 | 5 | 5 | 5 | 5 | 5 |
| Thermosetting resin 1 | | - | - | - | - | - | - | - | 1 | 3 | 5 | - | 12 | - | - |
| Thermosetting resin 2 | | 0.5 | 1 | 1.5 | 2 | 2.5 | 2 | 2 | - | - | - | - | - | 0.25 | 3 |
| HMT | | - | - | - | - | - | - | - | 0.1 | 0.3 | 0.5 | - | 1.2 | - | - |
| Partial condensate of HMMPME | | 0.575 | 1.15 | 1.73 | 2.31 | 2.88 | 2.31 | 2.31 | - | - | - | - | - | 0.288 | 3.46 |
| Sulfur | | 2 | 2 | 2 | 2 | 2 | 2 | 2 | 2 | 2 | 2 | 2 | 2 | 2 | 2 |

| Evaluation results | | | | | | | | | | | | | | | |
|---|---|---|---|---|---|---|---|---|---|---|---|---|---|---|---|
| tanδ | | 0.115 | 0.121 | 0.127 | 0.131 | 0.134 | 0.125 | 0.108 | 0.127 | 0.131 | 0.135 | 0.12 | 0.165 | 0.112 | 0.134 |
| E*(MPa) | | 10.4 | 10.9 | 11.8 | 13.1 | 14.8 | 14.6 | 12.8 | 8 | 9.4 | 13.8 | 6 | 16 | 7.3 | 18.5 |
| Steering stability | | 3 | 3 | 3 | 3 | 3 | 3 | 3 | 2 | 3 | 3 | 1 | 3 | 1 | 3 |
| Ride quality | | 3 | 3 | 3 | 3 | 2 | 3 | 3 | 3 | 3 | 3 | 3 | 1 | 3 | 1 |
| EB(%) | | 350 | 347 | 332 | 315 | 302 | 340 | 325 | 355 | 353 | 342 | 360 | 285 | 354 | 298 |
| Adhesion test | without heat aging after heat aging | 5 | 5 | 5 | 5 | 5 | 5 | 5 | 5 | 5 | 5 | 5 | 4 | 5 | 5 |
| | | 5 | 5 | 5 | 5 | 5 | 5 | 5 | 5 | 5 | 4 | 5 | 4 | 5 | 5 |

In Examples 1 to 19, it is found that E*, tan δ and EB can be improved in good balance by adding suitable amounts of a thermosetting resin and a curing accelerator to the rubber composition and, further, steering stability and ride quality also show excellent results. Among these, in Examples 10 to 16, adhesion property of the steel cord with the base tread is not adversely affected by using a resorcin formaldehyde resin as the thermosetting resin and a methylolmelamine resin as the curing accelerator, and combining them.

According to the present invention, a pneumatic tire which sufficiently satisfies the compatibility among steering stability, ride quality and lowering of rolling resistance by compounding a diene rubber and a thermosetting resin to the rubber composition for a base tread and, further, specifying complex elastic modulus E*, a loss tangent tan δ and a strength at break EB of the rubber composition

Further, according to the present invention, it provides a pneumatic tire, wherein, in addition that the above-mentioned effects are sufficiently improved by using a polycondensate of resorcin with formaldehyde as a thermosetting resin and further compounding a specific curing accelerator to the rubber composition, generation of amine caused by a curing reaction of the thermosetting resin with the curing accelerator can be suppressed, and inhibition of adhesion between a breaker and a steel cord by the amine is suppressed.

## Claims

1. A pneumatic tire having a base tread comprising a rubber composition containing 0.5 to 10 parts by weight of a thermosetting resin based on 100 parts by weight of a diene rubber, wherein the complex elastic modulus E* of the rubber composition measured under the conditions of a frequency of 10 Hz, an initial strain of 10 % and a dynamic strain of 1 % at 60°C using a viscoelasticity spectrometer is 8 to 15 MPa, the tan δ is at most 0.15 and the elongation at break EB of the rubber composition in a tensile test determined according to JIS K6251 is at least 300 %.

2. The pneumatic tire of Claim 1, wherein the rubber composition further comprises carbon black having a nitrogen adsorbing-specific area of 74 to 115 m²/g.

3. The pneumatic tire of Claim 1, wherein the thermosetting resin is 0.5 to 2.5 parts by weight of a resorcin formaldehyde resin.

## Patentansprüche

1. Luftreifen mit einer Basislauffläche, die eine Kautschukmischung umfasst, die 0,5 bis 10 Gewichtsteile eines warm aushärtenden Harzes auf der Basis von 100 Gewichtsteilen eines Dienkautschuks umfasst, wobei der komplexe Elastizitätsmodul E* der Kautschukmischung, unter den Bedingungen einer Frequenz von 10 Hz, einer Anfangsdehnung von 10 % und einer dynamischen Dehnung von 1 % bei 60°C unter Verwendung eines Viskoelastizitätsspektrometers gemessen, 8 bis 15 MPa beträgt, der tan δ höchstens 0,15 beträgt und die Bruchdehnung EB der Kautschukmischung bei einem Zugversuch, gemäß JIS K6251 ermittelt, zumindest 300 % beträgt.

2. Luftreifen nach Anspruch 1,
wobei die Kautschukmischung ferner Ruß mit einer über Stickstoffadsorption bestimmten spezifischen Oberfläche von 74 bis 115 m²/g umfasst.

3. Luftreifen nach Anspruch 1,
wobei das warm aushärtende Harz 0,5 bis 2,5 Gewichtsteile eines Resorcin-Formaldehydharzes beträgt.

## Revendications

1. Pneumatique ayant une bande de roulement de base comprenant une composition de caoutchouc contenant 0,5 à 10 parties en masse d'une résine thermodurcissable sur la base de 100 parties en masse d'un caoutchouc diénique, où le module élastique complexe E* de la composition de caoutchouc mesuré dans les conditions d'une fréquence de 10 Hz, d'une déformation initiale de 10 % et d'une déformation dynamique de 1 % à 60°C au moyen d'un spectromètre à viscoélasticité est 8 à 15 MPa, la tan δ est d'au plus 0,15 et l'allongement à la rupture EB de la composition de caoutchouc dans un test de traction déterminé selon JIS K6251 est d'au moins 300 %.

2. Pneumatique selon la revendication 1 où la composition de caoutchouc comprend en outre du noir de carbone ayant une surface spécifique d'adsorption d'azote de 74 à 115 m²/g.

3. Pneumatique selon la revendication 1 où la résine thermodurcissable est 0,5 à 2,5 parties en masse d'une résine résorcine-formaldéhyde.
